# EUROPÄISCHE PATENTSCHRIFT

(11) **EP 2 023 026 B1**
(45) Veröffentlichungstag und Bekanntmachung des Hinweises auf die Patenterteilung: **03.07.2019**
(21) Anmeldenummer: 08013640.1
(22) Anmeldetag: 30.07.2008
(51) Int. Cl.: F16L 9/12

(54) **Rohr**
Pipe
Tuyau

(30) Priorität: 03.08.2007 DE 202007010885 U
(43) Veröffentlichungstag der Anmeldung: 11.02.2009
(73) Patentinhaber: REHAU AG + Co, 95111 Rehau (DE)
(72) Erfinder: Hendel, Roland, 91086 Aurachtal (DE); Kania, Guido, 91080 Marloffstein (DE)

(56) Entgegenhaltungen:
- EP-A1- 0 627 589
- WO-A1-97/30798
- FR-A- 1 401 443

## Beschreibung

Die vorliegende Erfindung betrifft ein Rohr, insbesondere zum Transport oder zur Speicherung von Fluiden, das wenigstens eine Schicht umfasst.

Aus dem Stand der Technik sind derartige Rohre für den Transport oder die Speicherung von flüssigen und/oder gasförmigen Medien bekannt. Solche Rohre dienen beispielsweise dem Transport von Trinkwasser aus Trinkwassereservoiren bis hin zum Endverbraucher, aber auch dem Rücktransport von Abwasser vom Endverbraucher zu Abwasserentsorgungsunternehmen.

Bei den genannten Rohren im Bereich der Trinkwasserversorgung kommt es mit der Zeit für gewöhnlich zu einer Besiedlung der Rohrinnenwand mit Organismen bzw. Mikroorganismen. Organismen können hierbei Pflanzen wie etwa Algen sein, während Mikroorganismen beispielsweise Bakterien und Pilze umfassen. Bei besagter Besiedlung mit Organismen bzw. Mikroorganismen spricht man auch von der Ausbildung eines Biofilms. Die entsprechenden Ablagerungen führen einerseits zu einem reduzierten Durchflussquerschnitt, und andererseits zu einer negativen Beeinflussung der Qualität des transportierten Trinkwassers. Hierbei kann es sogar zu einem epidemischen Risiko kommen, wenn die gebildeten Biofilme pathogene Keime enthalten. Neben den genannten Problemen bewirken die Mikroorganismen des Biofilms bei längerer Einwirkung eine biologisch induzierte Schädigung des Rohrmaterials. In diesem Zusammenhang sei beispielsweise die Korrosion metallischer Rohrleitungen durch den Einfluss sulfatreduzierender Bakterien oder der Abbau von Kunststoff durch Pilze genannt.

Zur Beseitigung besagter Biofilme bei den aus dem Stand der Technik bekannten Rohren müssen die inneren Rohroberflächen in regelmäßigen Abständen gereinigt werden. Dies ist in Anbetracht der oft nur schwer zugänglichen Rohr- oder Kanalsysteme äußerst zeit- und kostenintensiv.

Da die Innenwand solcher Rohre fertigungsbedingt eine gewisse Rauhigkeit aufweist, ist es insbesondere für Mikroorganismen leicht, sich an entsprechenden Mikrovertiefungen festzuhalten und sich dort anzulagern. Die sich anlagernden Mikroorganismen können dann die erwähnten Verkrustungen aufbauen und/oder den Rohrwerkstoff schädigen. Im Falle eines Abwasserrohres kann das zu transportierende Medium auch aggressive Stoffe oder Feststoffe enthalten, die sich ebenfalls in den Mikrovertiefungen der Rohrinnenwand ablagern können. Während besagte aggressive Stoffe ebenso den Rohrwerkstoff schädigen können, führen die im Medium mitgeführten Feststoffe eventuell ebenfalls zu Verkrustungen.

Aus der WO 97 30798 ist ein gattungsgemäßes Rohr zum Transport von flüssigen und/oder gasförmigen Medien bekannt, das aus einem polymeren Werkstoff hergestellt ist. Mit diesem Rohr soll die Verkrustungsneigung vermindert und die ursprünglichen Materialeigenschaften erhalten bleiben. Dies soll dadurch erreicht werden, indem die Oberfläche der Rohrinnenwand mit einer Schutzschicht versehen ist, wobei die Schutzschicht nach der Herstellung des Rohres aufgesprüht wird.

Das besagte nachträgliche Aufsprühen der Schutzschicht ist jedoch kompliziert und sehr aufwändig und damit zeit- und kostenintensiv. Darüber hinaus besteht die Gefahr einer schlechten Anhaftung der Beschichtung auf der Rohrinnenwand, so dass es eventuell zu einer stellenweisen oder sogar kompletten Ablösung der Beschichtung kommen kann. Dadurch geht einerseits der gewünschte Effekt hinsichtlich der Verminderung der Verkrustungsneigung bzw. des Erhalts der ursprünglichen Materialeigenschaften verloren, andererseits führt die abgelöste Beschichtung zu einer zusätzlichen Schadstoffbelastung des zu transportierenden Mediums, z.B. Trinkwasser.

Der Erfindung liegt daher die Aufgabe zugrunde, ein Rohr bereitzustellen, welches einer Ablagerung von Mikroorganismen oder Schadstoffen, und allgemein dem Aufbau eines Biofilms, wirkungsvoll entgegenwirkt und gleichzeitig einfach und kostengünstig herzustellen ist.

Erfindungsgemäß wird diese Aufgabe durch die kennzeichnenden Merkmale des Anspruchs 1 gelöst. Weitere die Erfindung detailliert beschreibende, vorteilhafte Ausgestaltungen sind in den Unteransprüchen ausgeführt.

Das erfindungsgemäße Rohr zeichnet sich dadurch aus, dass die wenigstens eine Schicht zumindest ein Material aus der Gruppe der fluorierten Verbindungen und zumindest ein Material aus der Gruppe der Silikone enthält. Fluorpolymere wie beispielsweise Polytetrafluorethylen (PTFE) oder Polyvinylidenfluorid (PVDF) weisen bereits günstige intrinsische Eigenschaften auf, die eine Anlagerung / Anhaftung von Mikroorganismen oder Schadstoffen erschweren. Hierfür ist u.a. die sehr niedrige Oberflächenspannung dieser Werkstoffe verantwortlich. Zugleich weisen diese Werkstoffe für gewöhnlich einen sehr geringen Reibungskoeffizienten auf. Das weiterhin in der Schicht vorhandene Material aus der Gruppe der Silikone verstärkt bzw. ergänzt die zuvor genannten Eigenschaften in synergistischer Weise, wobei es insgesamt zu sehr glatten, eine äußerst geringe Oberflächenspannung bzw. einen äußerst niedrigen Reibungskoeffizienten aufweisenden Oberflächen mit sehr geringer Adhäsionsneigung bei dem erfindungsgemäßen Rohr kommt, welche die Anhaftung von Mikroorganismen bzw. von Schadstoffen erheblich erschweren bzw. sogar vollkommen vermeiden. Erfindungsgemäß enthält die Schicht ein Silikonöl, das nach und nach aus der Schicht ausdiffundiert bzw. ausschwitzt und somit in flüssiger bzw. öliger Form an die Rohroberfläche gelangt. Durch den so entstehenden und sich immer wieder neu aufbauenden Silikonölfilm, der wie ein Gleitfilm wirkt, wird die Anhaftung von Mikroorganismen bzw. von Schadstoffen an der mit dem Medium in Kontakt stehenden Rohrinnenwand besonders wirkungsvoll verhindert.

Die zuvor genannten Fluorpolymere der Schicht beinhalten ebenso niedermolekulare Fluorpolymere.

Es kann vorteilhaft sein, dass die Schicht ein Fluorpolymer, vorzugsweise Polytetrafluorethylen (PTFE), aufweist. PTFE besitzt unter den Fluorpolymeren eine herausragende Stellung, da seine Oberflächenspannung extrem niedrig ist, so dass an entsprechenden Oberflächen die Anhaftung eines Biofilms weitestgehend ausgeschlossen ist.

Hierbei kann es von Vorteil sein, dass der Anteil des Fluorpolymers zwischen 0,1 und 3 Gew.-% liegt. Mit diesem Gehalt an Fluorpolymer kann ein effektiver Schutz vor Anlagerungen von Mikroorganismen oder Schadstoffen realisiert werden, wobei der Anteil gleichzeitig so gering ist, dass die Materialkosten für das Rohr niedrig gehalten werden können.

Erfindungsgemäß ist das Rohr so ausgeführt, dass die Schicht ein Silikonöl enthält. Das flüssige Silikonöl besitzt die Fähigkeit, nach und nach an die Oberfläche des erfindungsgemäßen Rohrs zu wandern bzw. zu diffundieren, d.h. auszuschwitzen, so dass an der Rohroberfläche ein sich stets neu aufbauender Silikonölfilm realisiert werden kann, welcher die anhaftungsvermindernden Eigenschaften des Materials aus der Gruppe der der fluorierten Verbindungen in synergistischer Weise unterstützt.

Hierbei kann es von Vorteil sein, dass der Anteil des Silikonöls zwischen 0,1 und 7 Gew.-% liegt. Bei diesem Gehalt an Silikonöl werden die angestrebten Eigenschaften, d.h. die Verhinderung einer Anlagerung von Mikroorganismen oder Schadstoffen an der mit dem Medium in Kontakt kommenden Rohrinnenwand, erreicht, wobei gleichzeitig ein hoher Materialverbrauch an Silikonöl vermieden wird.

Es kann sich als günstig erweisen, dass die Schicht PTFE, ein weiteres Fluorpolymer und Silikonöl aufweist.

Durch die Kombination von zwei Fluorpolymeren und Silikonöl kann eine besonders glatte und daher besonders effektive - im Hinblick auf die Vermeidung der Anlagerung von Mikroorganismen / Schadstoffen - Rohroberfläche realisiert werden. Als besonders vorteilhaft hat sich herausgestellt, dass das weitere Fluorpolymer Dynamar der Fa. DuPont ist. Dabei hat sich insbesondere die FX-Type als sehr geeignet herausgestellt.

Hierbei kann es günstig sein, dass der Anteil des weiteren Fluorpolymers zwischen 0,1 und 4 Gew.-% liegt. Mit besagtem Anteil lassen sich die gewünschten Eigenschaften hinsichtlich der Verhinderung einer Anlagerung von Mikroorganismen oder Schadstoffen erreichen, wobei gleichzeitig nur ein geringer Materialbedarf bezüglich dieses weiteren Fluorpolymers notwendig ist.

Es kann vorteilhaft sein, dass die Schicht Partikel aufweist, welche das zumindest eine Material aus der Gruppe der fluorierten Verbindungen und das zumindest eine Material aus der Gruppe der Silikone enthalten. Hierdurch ergibt sich eine besonders einfache und effektive Herstellungsmöglichkeit des erfindungsgemäßen Rohrs.

Darüber hinaus kann es vorteilhaft sein, dass die Schicht eine Matrix aufweist, in welche die Partikel eingebettet sind. Die Matrix übernimmt hierbei in erster Linie die Lagerung/Fixierung der Partikel an geeigneter bzw. gewünschter Position. Zudem kann der Matrixwerkstoff so gewählt sein, dass er die Wirkung der Partikel ergänzt bzw. sogar noch verstärkt.

Es kann von Vorteil sein, dass die Partikel einen maximalen Durchmesser von 100 µm aufweisen. Es hat sich herausgestellt, dass sich Partikel in besagtem Durchmesserbereich besonders günstig auf die gewünschten Oberflächeneigenschaften des erfindungsgemäßen Rohrs auswirken.

Ebenso kann es - je nach gewünschtem Anwendungsfall - von Vorteil sein, dass die Partikel entweder homogen in der Matrix verteilt sind, oder nur in einem definierten Teilbereich der Matrix angeordnet sind, oder aber die Konzentration der Partikel ausgehend von einer dem Fluid abgewandten Außenfläche der Schicht in Richtung einer dem Fluid zugewandten Innenfläche der Schicht kontinuierlich zu- oder abnimmt. Ist beispielsweise gewünscht, dass die Anhaftung von Mikroorganismen bzw. Schadstoffen sowohl an der mit dem Fluid in Kontakt gelangenden Innenseite, als auch der mit dem Umgebungsmaterial in Kontakt stehenden Außenseite vermieden wird, so bietet sich beispielsweise eine homogene Verteilung der Partikel in der Matrix an. Ebenso könnte in diesem Fall eine Anordnung der Partikel nur im jeweiligen Randbereich des Rohrs den gewünschten Effekt bewirken. Ist hingegen nur von einer geringen Anhaftung durch Mikroorganismen oder Schadstoffe an der Außenseite, jedoch von einer vermehrten Anhaftung an der Innenseite, d.h. an der mit dem Fluid in Kontakt geratenden Seite, auszugehen, so ist eine Anordnung der Partikel vorzuziehen, bei der ihre Konzentration ausgehend von einer dem Fluid abgewandten Außenfläche der Schicht in Richtung einer dem Fluid zugewandten Innenfläche der Schicht kontinuierlich zunimmt. Durch die spezielle und funktionsgerechte Verteilung der Partikel kann die jeweils einzusetzende Menge gegenüber einer homogenen Verteilung deutlich reduziert werden.
Außerdem kann es von Vorteil sein, dass die Matrix ein thermoplastisches Polymer wie Polyethylen, vernetztes Polyethylen (PE-X), Polypropylen, Polybuten oder Polyvinylchlorid aufweist und vorzugsweise aus diesem besteht. Diese Kunststoffe sind vergleichsweise günstig und weisen gute mechanische und physikalische/chemische Eigenschaften auf. Außerdem lassen sie sich relativ einfach verarbeiten. Im Falle der Verwendung von Polyvinylchlorid für den Matrixwerkstoff eignen sich insbesondere solche Typen mit einer Ca/Zn-Stabilisierung.

In einer vorteilhaften Ausgestaltung des erfindungsgemäßen Rohrs ist dieses zwei- oder mehrschichtig, wobei die innerste, dem Fluid zugewandte Schicht durch die zuvor in vorteilhaften Ausgestaltungen beschriebene wenigstens eine Schicht gebildet wird und die sich daran anschließende äußere Schicht bzw. die sich daran anschließenden äußeren Schichten einen polymeren Werkstoff aufweist bzw. aufweisen.

Durch den zweischichtigen Aufbau gelingt die Realisierung eines robusteren und mechanisch stärker beanspruchbaren Rohrs, wobei die jeweiligen Schichten im Sinne der jeweils beabsichtigten Funktion ausgelegt werden können. In diesem Zusammenhang ist die innerste Schicht beispielsweise so ausgelegt, dass sie die Anlagerung von Mikroorganismen bzw. von Schadstoffen unterbindet, während die sich daran außen anschließende Schicht beispielsweise dazu ausgelegt ist, eine hohe mechanische Stabilität des Rohrs zu gewährleisten.

Hierbei kann es sich als günstig erweisen, dass die sich an die innerste Schicht anschließende äußere Schicht bzw. die sich an die innerste Schicht anschließenden äußeren Schichten ein thermoplastisches Polymer wie Polyethylen, vernetztes Polyethylen (PE-X), Polypropylen, Polybuten oder Polyvinylchlorid aufweist bzw. aufweisen und vorzugsweise aus diesem besteht bzw. aus diesem bestehen. Im Falle der Verwendung von Polyvinylchlorid für die äußerste Schicht bzw. für eine äußere Schicht eignen sich insbesondere solche Typen mit einer Ca/Zn-Stabilisierung.

Darüber hinaus kann es sich als günstig erweisen, dass das Rohr zwei- oder mehrschichtig ist und durch einen Co-Extrusionsprozess hergestellt ist. Dies ist ein besonders effektives und wirtschaftliches Verfahren zur Herstellung mehrschichtiger Rohre.

Zudem kann es sich als günstig erweisen, dass das Rohr zwei- oder mehrschichtig ist und die Schichtdicke der innersten, dem Fluid zugewandten Schicht zwischen 1 und 10 % der Wanddicke des Rohrs beträgt. Bei diesem Schichtdickenbereich ist die gewünschte anlagerungsvermeidende Funktion der innersten Schicht gewährleistet. Gleichzeitig resultiert hieraus nur ein relativ geringer Materialverbrauch für die innerste Schicht, was sich kostenreduzierend auf die Herstellung des Rohrs auswirkt. Zudem wird durch die nur relativ geringe Dicke der innersten Schicht das mechanische Materialverhalten des gesamten Rohrs nur unwesentlich von dieser beeinflusst.

Neben den zuvor beschriebenen vorteilhaften Ausführungen des Rohres sind auch sämtliche möglichen Kombinationen davon vorstellbar.

Die Merkmale und Vorteile der Erfindung werden eingehender in der nachstehenden Beschreibung dargelegt, wobei auf die beigefügten, nicht maßstäblichen Zeichnungen Bezug genommen wird, auf denen folgendes dargestellt ist:
- Fig. 1:: Schnittdarstellung eines erfindungsgemäßen einschichtigen Rohrs
- Fig. 2:: Schnittdarstellung eines erfindungsgemäßen zweischichtigen Rohrs.

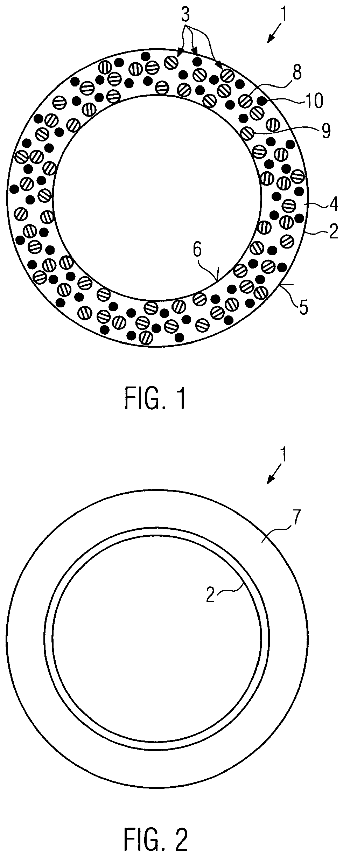

Die nicht maßstabsgetreue Darstellung gemäß Figur 1 zeigt einen Schnitt durch ein erfindungsgemäßes einschichtiges Rohr 1, wobei das Rohr 1 eine Schicht 2 mit einer Außenfläche 5 und einer Innenfläche 6 aufweist. Die Schicht 2 enthält eine Matrix 4 aus Polyethylen, in die Partikel 3 unterschiedlicher Materialien eingelagert sind. Hierbei sind Partikel 8 aus PTFE, Partikel 9 aus Dynamar™ der Fa. Dyneon, und Partikel 10 enthaltend Silikonöl in die Matrix 4 eingebettet. Dabei beträgt der Anteil an PTFE 2 Gew.-%, während der Anteil an Dynamar 2,5 Gew.-% und der Anteil an Silikonöl 5 Gew.-% beträgt, wobei diese Werte jeweils auf das Gesamtgewicht des Rohrs bezogen sind. Die Partikel 3 sind im Wesentlichen homogen innerhalb der Matrix 4 verteilt bzw. angeordnet. Die Dicke der Schicht 2 beträgt ca. 10 mm.

Die nicht maßstabsgetreue Darstellung gemäß Figur 2 zeigt einen Schnitt durch ein erfindungsgemäßes zweischichtiges Rohr 1 mit einer inneren Schicht 2 und einer sich außen anschließenden äußeren Schicht 7. Die innere Schicht 2 besteht aus einem Compound enthaltend die Materialien PTFE, Dynamar™, Silikonöl und ein weiteres Fluorpolymer. Hierbei beträgt der Anteil an PTFE 2 Gew.-%, während der Anteil an Dynamar 2,5 Gew.-% und der Anteil an Silikonöl 5 Gew.-% beträgt. Der Anteil des weiteren Fluorpolymers beträgt dementsprechend 90,5 Gew.-%. Die äußere Schicht 7 besteht aus Polyethylen. Die innere Schicht besitzt eine Dicke von ca. 1 mm, während die Wanddicke des Rohres ca. 15 mm beträgt.

## Patentansprüche

1. Rohr (1), insbesondere zum Transport oder zur Speicherung von Fluiden, umfassend wenigstens eine Schicht (2), wobei die Schicht (2) zumindest ein Material aus der Gruppe der fluorierten Verbindungen und zumindest ein Material aus der Gruppe der Silikone enthält, **dadurch gekennzeichnet, dass** die Schicht (2) ein Silikonöl enthält.

2. Rohr nach Anspruch 1, **dadurch gekennzeichnet, dass** die Schicht (2) ein Fluorpolymer, vorzugsweise Polytetrafluorethylen (PTFE), aufweist.

3. Rohr nach Anspruch 1 oder 2, **dadurch gekennzeichnet, dass** der Anteil des Fluorpolymers zwischen 0,1 und 3 Gew.-% liegt.

4. Rohr nach zumindest einem der vorangegangenen Ansprüche, **dadurch gekennzeichnet, dass** der Anteil des Silikonöls zwischen 0,1 und 7 Gew.-% liegt.

5. Rohr nach zumindest einem der vorangegangenen Ansprüche, **dadurch gekennzeichnet, dass** die Schicht (2) PTFE, ein weiteres Fluorpolymer und Silikonöl aufweist.

6. Rohr nach zumindest einem der vorangegangenen Ansprüche, **dadurch gekennzeichnet, dass** der Anteil des weiteren Fluorpolymers zwischen 0,1 und 4 Gew.-% liegt.

7. Rohr nach zumindest einem der vorangegangenen Ansprüche, **dadurch gekennzeichnet, dass** die Schicht (2) Partikel (3) aufweist, welche das zumindest eine Material aus der Gruppe der fluorierten Verbindungen und das zumindest eine Material aus der Gruppe der Silikone enthalten.

8. Rohr nach zumindest einem der vorangegangenen Ansprüche, **dadurch gekennzeichnet, dass** die Schicht (2) eine Matrix (4) aufweist, in welche die Partikel (3) eingebettet sind.

9. Rohr nach zumindest einem der vorangegangenen Ansprüche, **dadurch gekennzeichnet, dass** die Partikel (3) einen maximalen Durchmesser von 100 um aufweisen.

10. Rohr nach zumindest einem der vorangegangenen Ansprüche, **dadurch gekennzeichnet, dass** die Partikel (3) homogen in der Matrix (4) verteilt sind, oder dass die Partikel (3) nur in einem Teilbereich der Matrix (4) angeordnet sind.

11. Rohr nach zumindest einem der vorangegangenen Ansprüche, **dadurch gekennzeichnet, dass** die Konzentration der Partikel (3) ausgehend von einer dem Fluid abgewandten Außenfläche (5) der Schicht (2) in Richtung einer dem Fluid zugewandten Innenfläche (6) der Schicht (2) kontinuierlich zunimmt, oder dass die Konzentration der Partikel (3) ausgehend von einer dem Fluid abgewandten Außenfläche (5) der Schicht (2) in Richtung einer dem Fluid zugewandten Innenfläche (6) der Schicht (2) kontinuierlich abnimmt.

12. Rohr nach zumindest einem der vorangegangenen Ansprüche, **dadurch gekennzeichnet, dass** die Matrix (3) ein thermoplastisches Polymer wie Polyethylen, vernetztes Polyethylen (PE-X), Polypropylen, Polybuten oder Polyvinylchlorid aufweist und vorzugsweise aus diesem besteht.

13. Rohr nach zumindest einem der vorangegangenen Ansprüche, **dadurch gekennzeichnet, dass** es zwei- oder mehrschichtig ist, wobei die innerste, dem Fluid zugewandte Schicht durch die Schicht (2) gebildet wird und die sich daran anschließende äußere Schicht (7) bzw. die sich daran anschließenden äußeren Schichten einen polymeren Werkstoff aufweist bzw. aufweisen.

14. Rohr nach zumindest einem der vorangegangenen Ansprüche, **dadurch gekennzeichnet, dass** es zwei- oder mehrschichtig ist und die Schichtdicke der innersten, dem Fluid zugewandten Schicht (2) zwischen 1 und 10 % der Wanddicke des Rohrs beträgt.

## Claims

1. Pipe (1), in particular for transporting or storing fluids, comprising at least one layer (2), wherein the layer (2) contains at least one material from the group of fluorinated compounds and at least one material from the group of silicones, **characterised in that** the layer (2) contains a silicone oil.

2. Pipe according to claim 1, **characterised in that** the layer (2) has a fluoropolymer, preferably polytetrafluoroethylene (PTFE).

3. Pipe according to claim 1 or 2, **characterised in that** the proportion of fluoropolymer is between 0.1 and 3 percent by weight.

4. Pipe according to at least one of the preceding claims, **characterised in that** the proportion of silicone oil is between 0.1 and 7 percent by weight.

5. Pipe according to at least one of the preceding claims, **characterised in that** the layer (2) has PTFE, another fluoropolymer and silicone oil.

6. Pipe according to at least one of the preceding claims, **characterised in that** the proportion of the other fluoropolymer is between 0.1 and 4 percent by weight.

7. Pipe according to at least one of the preceding claims, **characterised in that** the layer (2) has particles (3), which contain the at least one material from the group of fluorinated compounds and the at least one material from the group of silicones.

8. Pipe according to at least one of the preceding claims, **characterised in that** the layer (2) has a matrix (4), into which the particles (3) are embedded.

9. Pipe according to at least one of the preceding claims, **characterised in that** the particles (3) have a maximum diameter of 100 µm.

10. Pipe according to at least one of the preceding claims, **characterised in that** the particles (3) are distributed homogeneously in the matrix (4), or that the particles (3) are arranged only in a partial area of the matrix (4).

11. Pipe according to at least one of the preceding claims, **characterised in that** the concentration of particles (3) increases continuously starting out from an outer surface (5) of the layer (2) facing away from the fluid in the direction of an inner surface (6) of the layer (2) facing the fluid, or that the concentration of particles (3) decreases continuously starting out from an outer surface (5) of the layer (2) facing away from the fluid in the direction of an inner surface (6) of the layer (2) facing the fluid.

12. Pipe according to at least one of the preceding claims, **characterised in that** the matrix (3) has a thermoplastic polymer such as polyethylene, cross-linked polyethylene (PE-X), polypropylene, polybutene or polyvinyl chloride and preferably consists of this.

13. Pipe according to at least one of the preceding claims, **characterised in that** it is double-layered or multi-layered, wherein the innermost layer facing the fluid is formed by the layer (2) and the adjoining outer layer (7) or the adjoining outer layers has or have a polymer material.

14. Pipe according to at least one of the preceding claims, **characterised in that** it is double-layered or multi-layered and the layer thickness of the innermost layer (2) facing the fluid amounts to between 1 and 10% of the wall thickness of the pipe.

## Revendications

1. Tuyau (1), en particulier servant au transport ou au stockage de fluides, comprenant au moins une couche (2), dans lequel la couche (2) contient au moins un matériau issu du groupe des composés fluorés et au moins un matériau issu du groupe des silicones, **caractérisé en ce que** la couche (2) contient une huile de silicone.

2. Tuyau selon la revendication 1, **caractérisé en ce que** la couche (2) présente un fluoropolymère, de préférence du polytétrafluoroéthylène (PTFE).

3. Tuyau selon la revendication 1 ou 2, **caractérisé en ce que** la fraction du fluoropolymère est comprise entre 0,1 et 3 % en poids.

4. Tuyau selon au moins l'une quelconque des revendications précédentes, **caractérisé en ce que** la fraction de l'huile de silicone est comprise entre 0,1 et 7 % en poids.

5. Tuyau selon au moins l'une quelconque des revendications précédentes, **caractérisé en ce que** la couche (2) présente du PTFE, un autre fluoropolymère et de l'huile de silicone.

6. Tuyau selon au moins l'une quelconque des revendications précédentes, **caractérisé en ce que** la fraction de l'autre fluoropolymère est comprise entre 0,1 et 4 % en poids.

7. Tuyau selon au moins l'une quelconque des revendications précédentes, **caractérisé en ce que** la couche (2) présente des particules (3), lesquels contiennent l'au moins un matériau issu du groupe des composés fluorés et l'au moins un matériau issu du groupe des silicones.

8. Tuyau selon au moins l'une quelconque des revendications précédentes, **caractérisé en ce que** la couche (2) présente une matrice (4), dans laquelle les particules (3) sont intégrées.

9. Tuyau selon au moins l'une quelconque des revendications précédentes, **caractérisé en ce que** les particules (3) présentent un diamètre maximal de 100 µm.

10. Tuyau selon au moins l'une quelconque des revendications précédentes, **caractérisé en ce que** les particules (3) sont réparties de manière homogène dans la matrice (4), ou que les particules (3) sont disposées seulement dans une zone partielle de la matrice (4).

11. Tuyau selon au moins l'une quelconque des revendications précédentes, **caractérisé en ce que** la concentration des particules (3) augmente en continu en partant d'une surface extérieure (5), opposée au fluide, de la couche (2) en direction d'une surface intérieure (6), tournée vers le fluide, de la couche (2), ou que la concentration des particules (3) diminue en continu en partant d'une surface extérieure (5), opposée au fluide, de la couche (2) en direction d'une surface intérieure (6), tournée vers le fluide, de la couche (2).

12. Tuyau selon au moins l'une quelconque des revendications précédentes, **caractérisé en ce que** la matrice (3) présente un polymère thermoplastique tel que du polyéthylène, un polyéthylène réticulé (PE-X), du polypropylène, du polybutène ou du chlorure de polyvinyle et est constituée de préférence de celui-ci.

13. Tuyau selon au moins l'une quelconque des revendications précédentes, **caractérisé en ce qu'**il est en deux couches ou multicouche, dans lequel la couche la plus intérieure, tournée le fluide est formée par la couche (2) et la couche extérieure (7) s'y raccordant ou les couches extérieures s'y raccordant présente ou présentent un matériau polymère.

14. Tuyau selon au moins l'une quelconque des revendications précédentes, **caractérisé en ce qu'**il est à deux couches ou multicouche et l'épaisseur de couche de la couche (2) la plus intérieure, tournée vers le fluide, présente une valeur comprise entre 1 et 10 % de l'épaisseur de paroi du tuyau.
